(19) **Europäisches Patentamt / European Patent Office / Office européen des brevets**

(11) **EP 4 135 949 B1**

(12) **EUROPEAN PATENT SPECIFICATION**

(45) Date of publication and mention
of the grant of the patent:
**03.04.2024 Bulletin 2024/14**

(21) Application number: **21717849.0**

(22) Date of filing: **08.04.2021**

(51) International Patent Classification (IPC):
**B26B 21/56** (2006.01)    **B26B 21/58** (2006.01)
**B26B 21/60** (2006.01)    **B23P 15/40** (2006.01)

(52) Cooperative Patent Classification (CPC):
**B26B 21/56; B23P 15/403; B26B 21/58; B26B 21/60**

(86) International application number:
**PCT/EP2021/059198**

(87) International publication number:
**WO 2021/209314 (21.10.2021 Gazette 2021/42)**

(54) **CUTTING BLADE WITH A CONCAVE BEVEL AND HAIR REMOVAL DEVICE**

SCHNEIDMESSER MIT KONKAVER FASE UND HAARENTFERNUNGSVORRICHTUNG

LAME DE COUPE AVEC UN BISEAU CONCAVE ET DISPOSITIF DE RASOIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2020 EP 20169930**

(43) Date of publication of application:
**22.02.2023 Bulletin 2023/08**

(73) Proprietors:
- **GFD Gesellschaft für Diamantprodukte mbH**
  **89231 Ulm (DE)**
- **The Gillette Company LLC**
  **Boston, Massachusetts 02127 (US)**

(72) Inventors:
- **GLUCHE, Peter**
  **89287 Bellenberg (DE)**
- **GRETZSCHEL, Ralph**
  **89231 Neu-Ulm/Offenhausen (DE)**
- **MERTENS, Michael**
  **89269 Vöhringen/Illerberg (DE)**

(74) Representative: **P&G Patent Germany**
**Procter & Gamble Service GmbH**
**Sulzbacher Straße 40**
**65824 Schwalbach am Taunus (DE)**

(56) References cited:
**WO-A1-00/38869     WO-A2-02/083374**
**DE-A1- 19 859 905     US-A- 3 606 682**

**Description**

The present invention relates to a cutting blade having a blade body comprising or consisting of a first material and a second material joined to the first material, the cutting blade having a first face, a second face opposed to the first face, and a cutting edge wherein the first face comprises a first surface and the second face comprises a primary bevel having a convex or straight cross-sectional shape and a secondary bevel having a concave cross-sectional shape. Moreover, the present invention relates to a hair removal device comprising this cutting blade.

The following definitions are used in the present application:

- the rake face is the surface of a cutting blade over which the cut hair slides that is removed in the cutting process

- the clearance face is the surface of a cutting tool that passes over the skin; the angle between the clearance face and the contacting surface to the skin is the clearance angle $\alpha$

- The cutting bevel of a cutting blade is enclosed by the rake face and the clearance face and denoted by the bevel angle $\theta$

- The cutting edge is the line of intersection of the rake face and the clearance face

Cutting blades, in particular razor blades, are typically made out of a suitable substrate material such as stainless steel in which a symmetric wedge-shaped cutting edge is formed.

With respect to razor blades, the design of the cutting blade has to be optimized to find the best compromise between the sharpness of the blade and the mechanical strength and hence durability of the cutting edge. The fabrication of conventional stainless steel razor blades involves a hardening treatment of the steel substrates before the blade is sharpened from both sides to form a symmetric cutting edge usually by grinding the hardened steel substrate.

A further coating may be applied to the steel blade after sharpening to optimize the mechanical properties of the blades. Hard coating materials such as diamond, amorphous diamond, diamond-like carbon (DLC), nitrides, carbides, or oxides are suitable to improve the mechanical strength of the cutting edge.

Thus, the harder the cutting edge material, the longer the edge holding property and in consequence the less wear is expected. Other coatings may be applied to increase the corrosion resistance or reduce the blade friction.

Most blades in the prior art are focused on blades with a symmetric blade body. However, some approaches exist where blades with an asymmetric blade are taught.

In US 3,606,682, a razor blade with improved cutting ease and shaving comfort is described. The blade has a recessed portion adjacent to the cutting edge which allows an improved shaving comfort. This effect is shown for symmetric and asymmetric blade bodies.

US 3,292,478 describes a cutting die knife for textiles, leather and similar sheet materials wherein the knife has suitably inclined surfaces on both sides with the consequence that the cutting edge is not positioned centrally between the side surfaces and the knife has an asymmetric shape.

There is a continuing desire to reduce the force needed to cut an object, since this requires less energy and creates less wear of the cutting edge. In the context of shaving, cutting hairs at lower forces results in less pulling on the hairs and hence less discomfort.

A reduction of the cutting force is achieved by reducing the angle of the wedge-shaped cutting tool. However, making the edge sharper also makes it more fragile and despite the application of hard coatings, the durability of conventional steel razor blades is still limited today.

Furthermore, a significant contribution to the cutting force arises from the friction between the tool and the object being cut.

The present invention therefore addresses the mentioned drawbacks in the prior art and provides cutting blades with a design, which allows at the same time, a high comfort during the cutting process, i.e. a low cutting force, and a high durability, i.e. a low fragility of the blade.

This problem is solved by the cutting blade with the features of claim 1 and the hair removal device with the features of claim 15. The further dependent claims define preferred embodiments of such a blade.

The term "comprising" in the claims and in the description of this application has the meaning that further components are not excluded. Within the scope of the present invention, the term "consisting of" should be understood as preferred embodiment of the term "comprising". If it is defined that a group "comprises" at least a specific number of components, this should also be understood such that a group is disclosed which "consists" preferably of these components.

In the following, the term cross-sectional view refers to a view of a slice through the cutting element perpendicular to the cutting edge (if the cutting edge is straight) or perpendicular to the tangent of the cutting edge (if the cutting edge is curved) and perpendicular to the surface of the substrate of the cutting element.

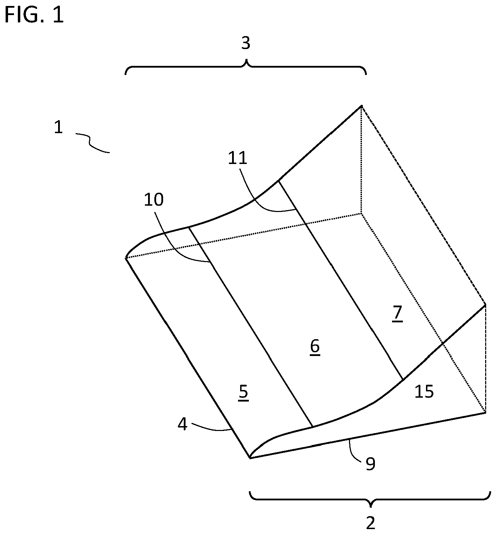

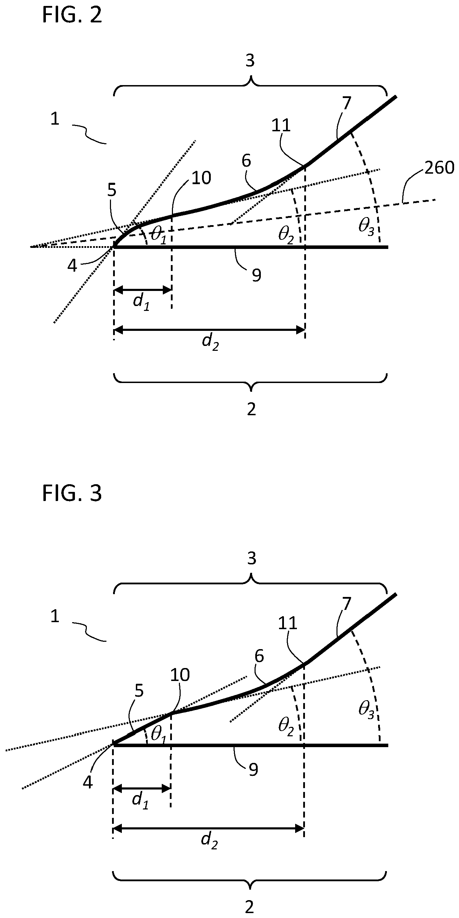

The term line has to be understood as the linear extension of a connecting point (according to a cross-sectional view as in Fig. 3) between different bevels regarding the perspective view (as in Fig. 1). As an example, if a concave bevel is adjacent to a convex bevel the turning point in the cross-sectional view is extended to a line in the perspective view.

According to the present invention a cutting blade is provided having a blade body comprising or consisting of a first material and a second material joined with the first material, the cutting blade having a first face, a second face opposed to the first face, and a cutting edge, wherein

- the first face comprises a first surface
- the second face comprises a primary bevel having a convex or straight cross-sectional shape and a secondary bevel having a concave cross-sectional shape with

  - a first line connecting the primary bevel and the secondary bevel
  - the primary bevel extending from the cutting edge to the first line,
  - the cutting edge and the primary bevel are shaped in the second material
  - a first wedge angle $\theta_1$ between the first surface and the primary bevel or its tangent,
  - a second wedge angle $\theta_2$ between the first surface and the tangent of the secondary bevel.

It was surprisingly found that a cutting blade with a very stable cutting edge together with a very good cutting performance can be provided when the wedge angles fulfill the following conditions:

$$\theta_1 > \theta_2.$$

The cutting blades according to the present invention have low cutting forces due to a thin secondary bevel with a low wedge angle $\theta_2$. This is realized by a reduction of the contact area between the cutting blade in the region of the secondary bevel, which has the function of the penetrating bevel, and the object being cut. According to the present invention the concave cross-sectional shape of the rake face results in a significant reduction of the cutting force.

The second wedge angle $\theta_2$ represents the penetration angle of the blade penetrating in the object being cut. The smaller the penetrating angle $\theta_2$, the lower the force to penetrate the object being cut.

The cutting blades according to the present invention are strengthened by adding a primary bevel with a first wedge angle $\theta_1$ which is greater than the second wedge angle $\theta_2$. The primary bevel with the first wedge angle $\theta_1$ has therefore the function to stabilize the cutting edge mechanically against damage from the cutting operation which allows a slim blade body in the area of the secondary bevel without affecting the cutting performance of the blade. In consequence, by using a primary bevel with the wedge angle $\theta_1$ the second wedge angle $\theta_2$ can be reduced. In other words, the wedge angle $\theta_1$ has the function to stabilize the cutting edge which allows a slim blade body in the area of the secondary bevel without effecting the cutting performance of the blade.

According to a preferred embodiment, the cutting blade has an asymmetric cross-sectional shape. The asymmetrical cross-sectional shape refers to the symmetry with respect to an axis which is the bisecting line of the primary wedge angle $\theta_2$ and anchored at the cutting edge.

According to a further preferred embodiment, the first wedge angle $\theta_1$ ranges from 10° to 90°, preferably 12° to 75°, more preferably 15° to 46°, and even more preferably 20° to 45° and/or the second wedge angle $\theta_2$ ranges from -5° to 40°, preferably 0° to 30°, more preferably 5° to 25° and even more preferably from 10° to 15° and/or the second wedge angle $\theta_2$ ranges from -5° to 30°, preferably 0° to 20°, more preferably -5° to 30°, preferably 0° to 20°, more preferably 5° to 15°, and even more preferably 8° to 12°.

According to a further preferred embodiment, the primary bevel has a length $d_1$ being the dimension projected onto the first surface taken from the cutting edge to the first line from 0.1 to 7 $\mu$m, preferably from 0.5 to 5 $\mu$m, and more preferably 1 to 3 $\mu$m. A length $d_1$ < 0.1 $\mu$m is difficult to produce since an edge of such length is too fragile and would not allow a stable use of the cutting blade. The primary bevel stabilizes the blade body with the secondary bevel which allows a slim blade in the area of the secondary bevel which offers a low cutting force. It has been surprisingly found that the primary bevel does not affect the cutting performance provided the length $d_1$ is not larger than 7 $\mu$m.

Preferably, the dimension projected onto the first surface (9) and/or the imaginary extension of the first surface (9') taken from the cutting edge (4) to a second line (11) has a length $d_2$ which ranges from 1 to 75 $\mu$m, more preferably 5 to 50 $\mu$m, and even more preferably from 10 to 35 $\mu$m. The second line may be the final line of the secondary bevel or, optionally, the intersecting line of the secondary bevel with a tertiary bevel. The length $d_2$ corresponds to the penetration depth of the cutting blade in the object to be cut. In general, $d_2$ corresponds to at least 30% of the diameter of the object to be cut, i.e. when the object is human hair which typically has a diameter of around 100 $\mu$m the length $d_2$ is around 30 $\mu$m.

The cutting blade is preferably defined by a blade body comprising or consisting of a first material and a second material joined with the first material. The second material can be deposited as a coating at least in regions of the first material, i.e. the second material can be an enveloping coating of the first material or a coating deposited on the first material on the first face.

The material of the first material is in general not limited to any specific material as long it is possible to bevel this material.

However, according to an alternative embodiment the blade body consists only of the first material, i.e. an uncoated first material. In this case, the first material is preferably a material with an isotropic structure, i.e. having identical values of a property in all directions.

Such isotropic materials are often better suited for shaping, independent from the shaping technology.

The first material preferably comprises or consists of a material selected from the group consisting of

- metals, preferably titanium, nickel, chromium, niobium, tungsten, tantalum, molybdenum, vanadium, platinum, germanium, iron, and alloys thereof, in particular steel,

- ceramics comprising at least one element selected from the group consisting of carbon and/or nitrogen, boron, oxygen or combinations thereof, preferably silicon carbide, zirconium oxide, aluminum oxide, silicon nitride, boron nitride, tantalum nitride, TiAlN, TiCN, and/or $TiB_2$,

- glass ceramics; preferably aluminum-containing glass-ceramics,

- composite materials made from ceramic materials in a metallic matrix (cermets),

- hard metals, preferably sintered carbide hard metals, such as tungsten carbide or titanium carbide bonded with cobalt or nickel,

- silicon or germanium, preferably with the crystalline plane parallel to the second face, wafer orientation <100>, <110>, <111> or <211>,

- single crystalline materials,

- glass or sapphire,

- polycrystalline or amorphous silicon or germanium,

- mono- or polycrystalline diamond, diamond like carbon (DLC), adamantine carbon and

- combinations thereof.

The steels used for the first material are preferably selected from the group consisting of 1095, 12C27, 14C28N, 154CM, 3Cr13MoV, 4034, 40X10C2M, 4116, 420, 440A, 440B, 440C, 5160, 5Cr15MoV, 8Cr13MoV, 95X18, 9Cr18MoV, Acuto+, ATS-34, AUS-4, AUS-6 (= 6A), AUS-8 (= 8A), C75, CPM-10V, CPM-3V, CPM-D2, CPM-M4, CPM-S-30V, CPM-S-35VN, CPM-S-60V, CPM-154, Cronidur-30, CTS 204P, CTS 20CP, CTS 40CP, CTS B52, CTS B75P, CTS BD-1, CTS BD-30P, CTS XHP, D2, Elmax, GIN-1, H1, N690, N695, Niolox (1.4153), Nitro-B, S70, SGPS, SK-5, Sleipner, T6MoV, VG-10, VG-2, X-15T.N., X50CrMoV15, ZDP-189.

It is preferred that the second material comprises or consists of a material selected from the group consisting of

- oxides, nitrides, carbides, borides, preferably aluminum nitride, chromium nitride, titanium nitride, titanium carbon nitride, titanium aluminum nitride, cubic boron nitride

- boron aluminum magnesium

- carbon, preferably diamond, poly-crystalline diamond, nano-crystalline diamond, diamond like carbon (DLC), and

- combinations thereof.

The second material may be preferably selected from the group consisting of $TiB_2$, AlTiN, TiAlN, TiAlSiN, TiSiN, CrAl, CrAlN, AlCrN, CrN, TiN, TiCN and combinations thereof.

Moreover, all materials cited in the VDI guideline 2840 can be chosen.

It is particularly preferred to use a second material of nano-crystalline diamond and/or multilayers of nano-crystalline and polycrystalline diamond as second material. It has been shown that production of nano-crystalline diamond, compared to the production of monocrystalline diamond, can be accomplished substantially more easily and economically. Hence, also longer and larger area cutting blades can be produced. Moreover, with respect to their grain size distribution, nano-crystalline diamond layers are more homogeneous than polycrystalline diamond layers, the material also shows less internal stress. Consequently, macroscopic distortion of the cutting edge is less likely.

It is preferred that the second material has a thickness of 0.15 to 20 $\mu$m, preferably 2 to 15 $\mu$m and more preferably 5 to 10 $\mu$m.

It is preferred that the second material has a Young's modulus of less than 1200 GPa, preferably less than 900 GPa, and more preferably less than 750 GPa. Due to the low Youngs' modulus the second material becomes more flexible and less stiff and may be better adapted to the Young's modulus of the substrate to increase mechanical stability of the cutting edge..

The second material has preferably a transverse rupture stress $\sigma_0$ of at least 1 GPa, more preferably of at least 2.5 GPa, and even more preferably at least 5 GPa.

With respect to the definition of transverse rupture stress $\sigma_0$, reference is made to the following literature references:

- R.Morrell et al., Int. Journal of Refractory Metals & Hard Materials, 28 (2010), p. 508 - 515;

- R. Danzer et al. in "Technische keramische Werkstoffe", published by J. Kriegesmann, HvB Press, Ellerau, ISBN 978-3-938595-00-8, chapter 6.2.3.1 "Der 4-Kugelversuch zur Ermittlung der biaxialen Biegefestigkeit spröder Werkstoffe"

The transverse rupture stress $\sigma_0$ is thereby determined by statistical evaluation of breakage tests, e.g.

in the B3B load test according to the above literature details. It is thereby defined as the breaking stress at which there is a probability of breakage of 63%.

Due to the extremely high transverse rupture stress of the second material the detachment of individual crystallites from the second material, in particular from the cutting edge, is almost completely suppressed. Even with long-term use, the cutting blade therefore retains its original sharpness.

The second material has preferably a hardness of at least 20 GPa. The hardness is determined by nanoindentation (Yeon-Gil Jung et. al., J. Mater. Res., Vol. 19, No. 10, p. 3076).

The second material has preferably a surface roughness $R_{RMS}$ of less than 100 nm, more preferably less than 50 nm, and even more preferably less than 20 nm, which is calculated according to

$$ R_{RMS} = \left(\frac{1}{A}\right) \iint Z(x,y)^2 dxdy $$

A = evaluation area
Z(x,y) = the local roughness distribution

The surface roughness $R_{RMS}$ is determined according to DIN EN ISO 25178. The mentioned surface roughness makes additional mechanical polishing of the surface of the second material superfluous.

In a preferred embodiment, the second material has an average grain size $d_{50}$ of the nanocrystalline diamond of 1 to 100 nm, preferably 5 to 90 nm and more preferably from 5 to 30 nm. The average grain size $d_{50}$ may be determined using X-ray diffraction or transmission electron microscopy and counting of the grains.

It is preferred that the first material and/or the second material is/are coated at least in regions with a low-friction material, preferably selected from the group consisting of fluoropolymers (e.g. PTFE), parylene, polyvinylpyrrolidone, polyethylene, polypropylene, polymethyl methacrylate, graphite, diamond-like carbon (DLC) and combinations thereof.

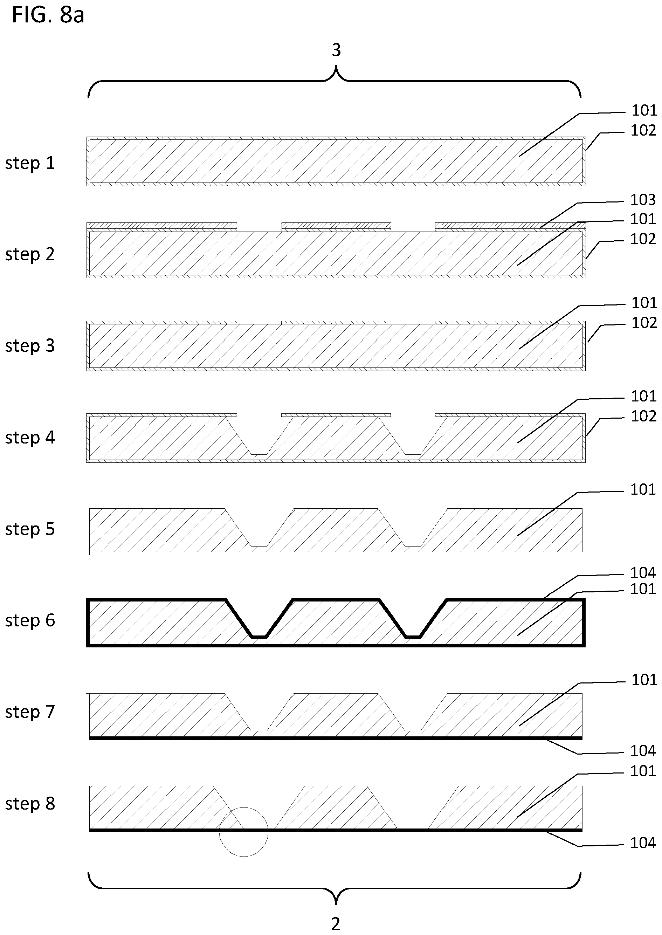

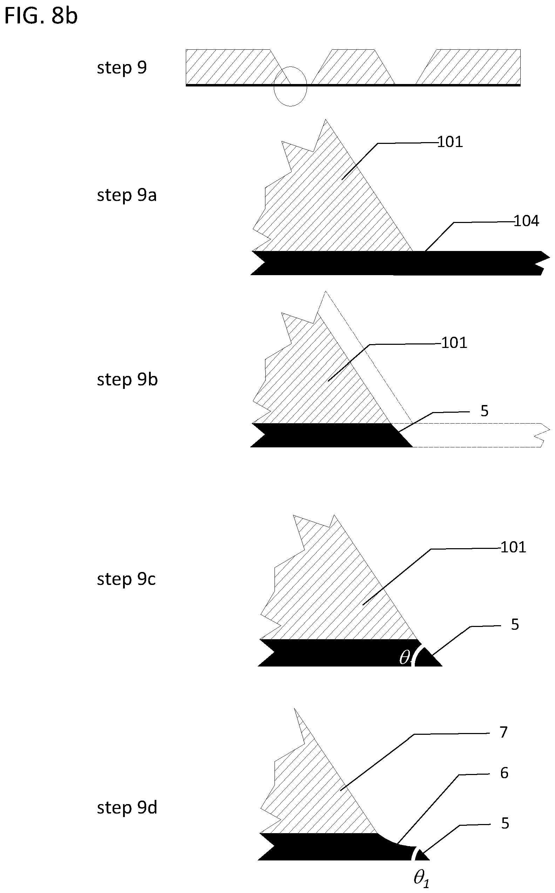

The cutting edge has preferably a tip radius of less than 200 nm, more preferably less than 100 nm and even more preferably less than 50 nm, determined e.g. by cross sectional SEM using the method illustrated in Fig. 8.

It is preferred that the tip radius r of the cutting edge correlates with the average grain size $d_{50}$ of the second material. It is hereby advantageous if the ratio between the tip radius r of the second material at the cutting edge and the average grain size $d_{50}$ of the nanocrystalline diamond hard coating r/d50 is from 0.03 to 20, preferably from 0.05 to 15, and particularly preferred from 0.5 to 10.

In a preferred embodiment, the second face further comprises a straight or concave tertiary bevel with a second line connecting the secondary bevel and the tertiary bevel. The tertiary bevel extends from the second line rearward. Moreover, a third wedge angle $\theta_3$ is located between the first surface and the tertiary bevel or its tangent, wherein the third wedge angle $\theta_3$ ranges preferably from 1° to 60°, more preferably 10° to 55°, and even more preferably 30° to 46°, and most preferably is 45°.

According to the present invention, the cutting blade are further strengthened by adding a thick and strong tertiary bevel that has a tertiary wedge angle greater than the secondary wedge angle and by employing this tertiary bevel to split the object to be cut, thus reducing the forces acting on the thin secondary bevel. For this function the third wedge angle $\theta_3$ has to be larger than the second wedge angle $\theta_2$. The tertiary bevel with the third wedge angle $\theta_3$ therefore has the function of splitting the object to be cut.

The edge connecting the primary bevel and the secondary bevel is preferably shaped within the second material.

It is further preferred that the edge between secondary and tertiary bevel is arranged at the boundary surface of the first material and the second material which makes the process of manufacture easier to handle and therefore more economic, e.g. the blades can be manufactured according to the process of Fig. 8a and 8b.

The first face preferably further comprises a quaternary bevel which extends from the cutting edge to the first surface. If the first face corresponds to the clearance face this quaternary bevel will improve the comfort of the cutting, i.e. for shaving.

In a preferred embodiment, the first face corresponds to the clearance face and the second face corresponds to the rake face of the cutting blade. However, it is also possible to use the first face as the rake face and the second face as the clearance face.

Hence, according to the present invention also a hair removal device comprising a razor blade as described above is provided.

The present invention is further illustrated by the following figures which show specific embodiments according to the present invention. However, these specific embodiments shall not be interpreted in any limiting way with respect to the present invention as described in the claims in the general part of the specification.

FIG. 1      is a perspective view of a first cutting blade in accordance with the present invention

FIG. 2      is a cross-sectional view of a cutting blade in accordance with the present invention with a convex primary bevel

FIG. 3      is a cross-sectional view of a cutting blade in accordance with the present invention with a straight primary bevel

FIG. 4      is a cross-sectional view of a further cutting blade in accordance with the present invention with a second material

FIG. 5 is a cross-sectional view of a further cutting blade in accordance with the present invention with a convex primary bevel and an additional bevel on the first face

FIG. 6 is a cross-sectional view of a further cutting blade in accordance with the present invention with a straight primary bevel and an additional bevel on the first face

FIG. 7 is a perspective view of a further cutting blade in accordance with the present invention with a non straight cutting edge comprising curved segments

FIG. 8a-b is a flow chart of the process for manufacturing the cutting blades

Fig. 9 is a cross sectional view of a round tip showing the determination of the tip radius

The following reference signs are used in the figures of the present application.

**Reference sign list**

1 blade
2 first face
3 second face
4 cutting edge
5 primary bevel
6 secondary bevel
7 tertiary bevel
9 first surface
9' imaginary extension of the first surface
10 first line
11 second line
15 blade body
18 first material
19 second material
20 boundary surface
60 bisecting line
61 perpendicular line
62 circle
65 construction point
66 construction point
67 construction point
260 bisecting line

In Fig.1 is a perspective view of the cutting blade according to the present invention. This cutting blade 1 has a blade body 15 which comprises a first face 2 and a second face 3 which is opposed to the first face 2. At the intersection of the first face 2 and the second face 3 a cutting edge 4 is located. The cutting edge 4 is shaped straight or substantially straight. The first face 2 comprises a planar first surface 9 while the second surface 3 is segmented in different bevels. The second face 3 comprises a convex shaped primary bevel 5, a concave shaped secondary bevel 6 and a straight tertiary bevel 7. The primary bevel 5 is connected via a first line 10 with the secondary bevel 6 which on the other end is connected to the tertiary bevel 7 via a second line 11.

In Fig. 2, a cross-sectional view of the cutting blade according to the present invention is shown. This cutting blade 1 has a first face 2 and a second face 3 which is opposed to the first face 2. At the intersection of the first face 2 and the second face 3 a cutting edge 4 is located. The first face 2 comprises a planar first surface 9 while the second face 3 is segmented in different bevels. The second face 3 of the cutting blade 1 has a convex shaped primary bevel 5 with a first wedge angle $\theta_1$ between the first surface 9 and the tangent of the primary bevel 5. The secondary bevel 6 is shaped concave and has a second wedge angle $\theta_2$ between the first surface 9 and the tangent of the secondary bevel 6 with a bisecting line 260 of the secondary wedge angle $\theta_2$ anchored at the cutting edge 4. $\theta_2$ is smaller than $\theta_1$. The straight tertiary bevel 7 has a third wedge angle $\theta_3$ which is larger than $\theta_2$. The primary bevel 5 has a length $d_1$ being the dimension projected onto the first surface 9 which is in the range from 0.1 to 7 $\mu$m. The primary bevel 5 and the secondary bevel 6 together have a length $d_2$ being the dimension projected onto the first surface 9 which is in the range from 1 to 150 $\mu$m, preferably 5 to 100 $\mu$m.

In Fig. 3, a cross-sectional view of the cutting blade according to the present invention is shown. This cutting blade 1 has a first face 2 and a second face 3 which is opposed to the first face 2. At the intersection of the first face 2 and the second face 3 a cutting edge 4 is located. The first face 2 comprises a planar first surface 9 while the second face 3 is segmented in different bevels. The second face 3 of the cutting blade 1 has a straight primary bevel 5 with a first wedge angle $\theta_1$ between the first surface 9 and the primary bevel 5. The secondary bevel 6 is shaped concave and has a second wedge angle $\theta_2$ between the first surface 9 and the tangent of the secondary bevel 6 which is smaller than $\theta_1$. The straight tertiary bevel 7 has a third wedge angle $\theta_3$ which is larger than $\theta_2$. The primary bevel 5 has a length $d_1$ being the dimension projected onto the first surface 9 which is in the range from 0.1 to 7 $\mu$m. The primary bevel 5 and the secondary bevel 6 together have a length $d_2$ being the dimension projected onto the first surface 9 which is in the range from 1 to 150 $\mu$m, preferably 5 to 100 $\mu$m.

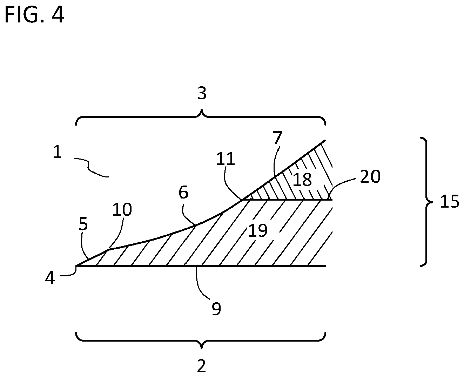

In Fig. 4, a further sectional view of a cutting blade of the present invention is shown where the cutting blade 1 comprising a blade body 15 comprises a first material 18 and a second material 19, e.g. a diamond layer on the first material 18 at the first face 2. The straight primary bevel 5 (extending from the cutting edge 4 to the first line 10) and the concave secondary bevel 6 (extending from the first line 10 to the second line 11) are located in the second material 19 while the tertiary bevel 7 is located in the first material 18. The first material 18 and the second material 19 are separated by a boundary surface 20. As shown in Fig. 2, the first bevel may alternatively be convex shaped.

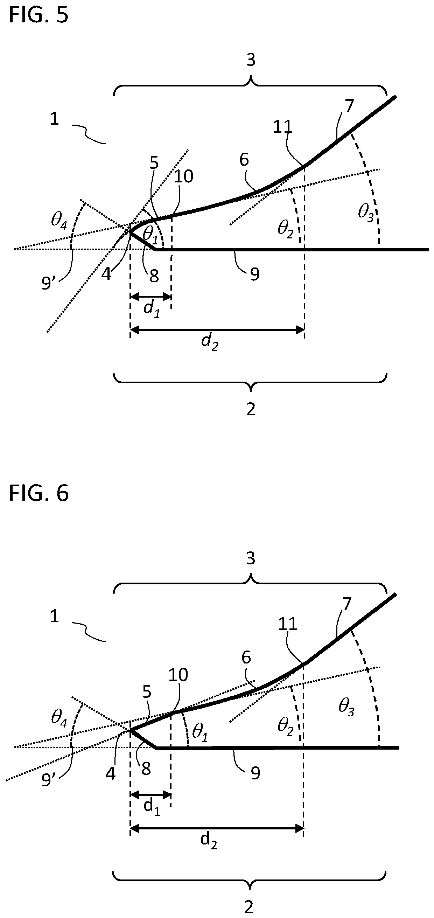

Fig. 5 shows an embodiment according to the present invention of a cutting blade 1 with a first face 2 and a second face 3. The second face 3 has a convex primary bevel 5, a concave secondary bevel 6 and a straight tertiary bevel 7. On the first face 2 between the surface 9 and the cutting edge 4, a further quaternary bevel 8 is located. The angle between the quaternary bevel 8 and the imaginary extension of the surface 9' is $\theta_4$. The wedge angle $\theta_1$ between the tangent of the convex primary bevel 5 and the surface 9 is larger than the wedge angle $\theta_2$ between the tangent of the concave secondary bevel 6 and the surface 9. Moreover, the wedge angle $\theta_3$ between the straight tertiary bevel 7 and the surface 9 is larger than $\theta_2$.

Fig. 6 shows a further embodiment according to the present invention of a cutting blade 1 with a first face 2 and a second face 3. The second face 3 has a straight primary bevel 5, a concave secondary bevel 6 and a straight tertiary bevel 7. On the first face 2 between the surface 9 and the cutting edge 4, a further quaternary bevel 8 is located. The angle between the quaternary bevel 8 and the imaginary extension of the surface 9' is $\theta_4$. The wedge angle $\theta_1$ between the straight primary bevel 5 and the surface 9 is larger than the wedge angle $\theta_2$ between the tangent of the concave secondary bevel 6 and the surface 9. Moreover, the wedge angle $\theta_3$ between the straight tertiary bevel 7 and the surface 9 is larger than $\theta_2$.

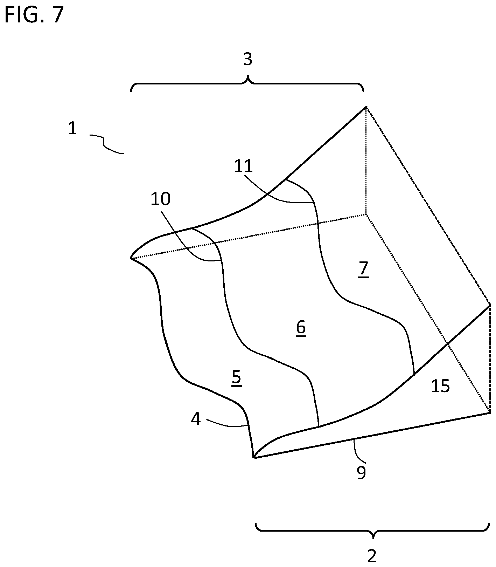

In Fig. 7, a perspective view of a further cutting blade according to the present invention is shown. The cutting blade 1 has a blade body 15 which comprises a first face 2 and a second face 3 which is opposed to the first face 2. A cutting edge 4 is located at the intersection of the first face 2 and the second face 3. In this embodiment, the cutting edge 4 is shaped not straight but consisting of curved segments. The first face 2 comprises a planar first surface 9 while the second surface 3 is segmented in a convex primary bevel 5, a concave secondary bevel 6 and a straight tertiary bevel 7. The primary bevel 5 is connected via an edge 10 with the secondary bevel 6 which on the other end is connected to the tertiary bevel 7 via an edge 11. The edges 10 and 11 follow the shape of the cutting edge 4 and are therefore shaped not straight but consisting of curved segments as well.

In Fig. 8a to 8b a flow chart of the inventive process is shown. In a first step 1, a silicon wafer 101 is coated by PE-CVD or thermal treatment (low pressure CVD) with a silicon nitride ($Si_3N_4$) layer 102 as protection layer for the silicon. The layer thickness and deposition procedure must be chosen carefully to enable sufficient chemical stability to withstand the following etching steps. In step 2, a photoresist 103 is deposited onto the $Si_3N_4$ coated substrate and subsequently patterned by photolithography. The ($Si_3N_4$) layer is then structured by e.g. $CF_4$-plasma reactive ion etching (RIE) using the patterned photoresist as mask. After patterning, the photoresist 103 is stripped by organic solvents in step 3. The remaining, patterned $Si_3N_4$ layer 102 serves as a mask for the following pre-structuring step 4 of the silicon wafer 101 e.g. by anisotropic wet chemical etching in KOH. The etching process is ended when the structures on the second face 3 have reached a predetermined depth and a continuous silicon first face 2 remains. Other wet- and dry chemical processes may be suited, e.g. isotropic wet chemical etching in $HF/HNO_3$ solutions or the application of fluorine containing plasmas. In the following step 5, the remaining $Si_3N_4$ is removed by, e.g. hydrofluoric acid (HF) or fluorine plasma treatment. In step 6, the pre-structured Si-substrate is coated with an approx. 10 $\mu m$ thin diamond layer 104, e.g. nano-crystalline diamond. The diamond layer 104 can be deposited onto the pre-structured second surface 3 and the continuous first surface 2 of the Si-wafer 101 (as shown in step 6) or only on the continuous fist surface 2 of the Si-wafer (not shown here). In the case of double-sided coating, the diamond layer 104 on the structured second surface 3 has to be removed in a further step 7 prior to the following edge formation steps 9a-9d of the cutting blade. The selective removal of the diamond layer 104 is performed e.g. by using an $Ar/O_2$-plasma (e.g. RIE or ICP mode), which shows a high selectivity towards the silicon substrate. In step 8, the silicon wafer 101 is thinned so that the diamond layer 104 is partially free standing without substrate material and the desired substrate thickness is achieved in the remaining regions. This step can be performed by wet chemical etching in KOH or $HF/HNO_3$ etchants or preferably by plasma etching in $CF_4$, $SF_6$, or $CHF_3$ containing plasmas in RIE or ICP mode.

In a next step 9, (Fig. 8b) the diamond layer is etched anisotropically by an $Ar/O_2$-plasma in an RIE system in order to form the cutting edge. By utilising a constant ratio of the etch rates for the silicon and diamond, a straight bevel with a wedge angle $\theta_1$ is formed. However, the process parameters can also be varied in time, e.g. decreasing the reactive component oxygen (variation of the oxygen flow/partial pressure) over time will lead to a reduced diamond etch rate in time, resulting in a curved convex primary bevel 5 as shown in Fig. 2. Step 9a shows the structured Si-wafer 101 and the diamond layer 104 prior to the etching step 9 in a larger magnification, Step 9b shows the resulting first bevel 5 after etching. Finally, steps 9c and 9d illustrate the formation of the secondary bevel 6. This step also involves simultaneous anisotropic etching of the diamond layer and the silicon performed, e.g. by an $Ar/O_2$plasma in an RIE system. The silicon acts as mask for the diamond layer 104. However, similar to step 9b the etch rate ratio between silicon and diamond may be varied in time. To form the concave secondary bevel 6 shown in step 9d an etch rate that increases over time for the diamond and a constant etch rate for silicon are used. Alternatively, the silicon etch rate may be decreased over time at a constant etch rate for the diamond. Process details are disclosed for instance in DE 198 59 905 A1.

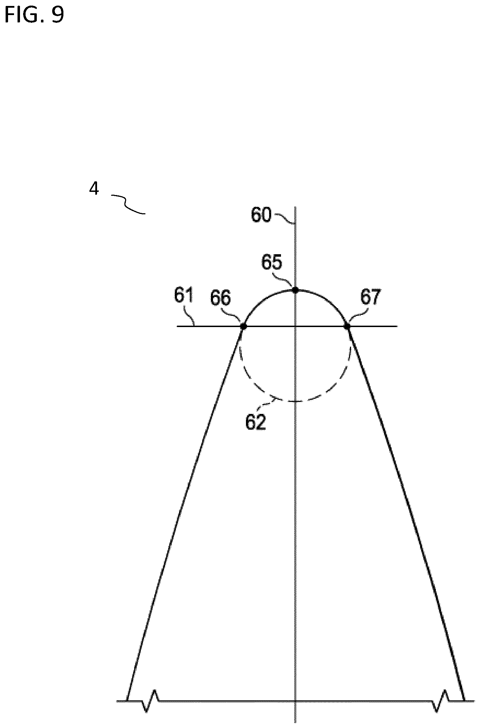

In Fig. 9, it is shown how the tip radius can be determined. The tip radius is determined by first drawing a line 60 bisecting the cross-sectional image of the first bevel of the cutting edge 1 in half. Where line 60 bisects the first bevel point 65 is drawn. A second line 61 is drawn perpendicular to line 60 at a distance of 100 nm from point 65. Where line 61 bisects the first bevel two additional points 66 and 67 are drawn. A circle 62 is then constructed from points 65, 66 and 67. The radius of circle 62 is the tip radius of the cutting edge 4.

**Claims**

1. A cutting blade (1) having a blade body (15) comprising or consisting of a first material (18) and a second material (19) joined with the first material (18), the cutting blade (1) having a first face (2), a second face (3) opposed to the first face (2), and a cutting edge (4), wherein

   • the first face (2) comprises a first surface (9)
   • the second face (3) comprises a primary bevel (5) having a convex or straight cross-sectional shape and a secondary bevel (6) having a concave cross-sectional shape with

   • a first line (10) connecting the primary bevel (5) and the secondary bevel (6),
   • the primary bevel (5) extending from the cutting edge (4) to the first line (10),
   • the cutting edge (4) and the primary bevel (5) are shaped in the second material (19),
   • a first wedge angle $\theta_1$ between the first surface (9) and the primary bevel (5) or the tangent of the primary bevel (5) through the cutting edge (4),
   • a second wedge angle $\theta_2$ between the first surface (9) and the tangent of the secondary bevel (6), wherein $\theta_1 > \theta_2$.

2. The cutting blade of claim 1, **characterized in that** the first wedge angle $\theta_1$ ranges from 10° to 90°, preferably 12° to 75°, more preferably 15° to 46°, and even more preferably 20° to 45° and/or the second wedge angle $\theta_2$ ranges from -5° to 40°, preferably 0° to 30°, more preferably 5° to 25° and/or the second wedge angle $\theta_2$ ranges from -5° to 30°, preferably 0° to 20°, more preferably 5° to 15°, and even more preferably 8° to 12°.

3. The cutting blade of any of claims 1 or 2, **characterized in that** the primary bevel (5) has a length $d_1$ being the dimension projected onto the first surface (9) taken from the cutting edge (4) to the first line (10) from 0.1 to 7 $\mu$m, preferably from 0.5 to 5 $\mu$m, more preferably from 1 to 3 $\mu$m.

4. The cutting blade of any of claims 1 to 3, **characterized in that** the dimension projected onto the first surface (9) and/or the imaginary extension of the first surface (9') taken from the cutting edge (4) to a second line (11) has a length $d_2$ which ranges from 1 to 150 $\mu$m, preferably 5 to 100 $\mu$m, more preferably from 10 to 75 $\mu$m, and in particular 15 to 50 $\mu$m.

5. The cutting blade of any of claims 1 to 4, **characterized in that** the first material (18) comprises or consists of a material selected from the group consisting of

   • metals, preferably titanium, nickel, chromium, niobium, tungsten, tantalum, molybdenum, vanadium, platinum, germanium, iron, and alloys thereof, in particular steel,
   • ceramics containing carbon, nitrogen, boron, oxygen and combinations thereof, preferably silicon carbide, zirconium oxide, aluminum oxide, silicon nitride, boron nitride, tantalum nitride, TiAlN, TiCN, and/or TiB$_2$,
   • glass ceramics; preferably aluminum-containing glass-ceramics,
   • composite materials made from ceramic materials in a metallic matrix (cermets),
   • hard metals, preferably sintered carbide hard metals, such as tungsten carbide or titanium carbide bonded with cobalt or nickel,
   • silicon or germanium, preferably with the crystalline plane parallel to the second face (2), wafer orientation <100>, <110>, <111> or <211>,
   • single crystalline materials,
   • glass or sapphire,
   • polycrystalline or amorphous silicon or germanium,
   • mono- or polycrystalline diamond, diamond like carbon (DLC), adamantine carbon and
   • combinations thereof.

6. The cutting blade of any of claims 1 to 5, **characterized in that** the second material (19) comprises or consists of a material selected from the group consisting of

   • oxides, nitrides, carbides, borides, preferably aluminum nitride, chromium nitride, titanium nitride, titanium carbon nitride, titanium aluminum nitride, cubic boron nitride
   • boron aluminum magnesium

• carbon, preferably diamond, poly-crystalline diamond, nano-crystalline diamond, diamond like carbon (DLC) like tetrahedral amorphous carbon, and
• combinations thereof.

7. The cutting blade of any of claims 1 to 6, **characterized in that** the second material (19) fulfills at least one of the following properties:

   • a thickness of 0.15 to 20 μm, preferably 2 to 15 μm and more preferably 3 to 12,
   • a modulus of elasticity of less than 1200 GPa, preferably less than 900 GPa, more preferably less than 750 GPa,
   • a transverse rupture stress $\sigma_0$ of at least 1 GPa, preferably at least 2.5 GPa, more preferably at least 5 GPa,
   • a hardness of at least 20 GPa.

8. The cutting blade of any of claims 1 to 7, **characterized in that** the second material (19) comprises or consists of nano-crystalline diamond and fulfills at least one of the following properties:

   • an average surface roughness $R_{RMS}$ of less than 100 nm, less than 50 nm, more preferably less than 20 nm,
   • an average grain size $d_{50}$ of the fine-crystalline diamond of 1 to 100 nm, preferably from 5 to 90 nm, more preferably from 7 to 30 nm, and even more preferably 10 to 20 nm.

9. The cutting blade of any of any of claims 1 to 8, **characterized in that** the first material (18) and/or the second material (19) are coated at least in regions with an low-friction material, preferably selected from the group consisting of fluoropolymers, parylene, polyvinylpyrrolidone, polyethylene, polypropylene, polymethyl methacrylate, graphite, diamond-like carbon (DLC) and combinations thereof.

10. The cutting blade of any of any of claims 1 to 9, **characterized in that** the cutting edge (4) has a tip radius of less than 200 nm, preferably less than 100 nm and more preferably less than 50 nm.

11. The cutting blade of any of claims 1 to 10, **characterized in that** the second face (3) further comprises a straight or concave tertiary bevel (7) with

    • a second line (11) connecting the secondary bevel (6) and the tertiary bevel (7),
    • the tertiary bevel (7) extending from the second line (11) rearward,
    • a third wedge angle $\theta_3$ between the first surface (9) and the tertiary bevel (7) or its tangent, wherein the third wedge angle $\theta_3$ ranges preferably from 1° to 60°, more preferably 10° to 55°, and even more preferably 19° to 46°, and most preferably is 45°.

12. The cutting blade of any of any of claims 1 to 11, **characterized in that** the second line (11) is arranged at a boundary surface (20) of the first material (18) and the second material (19).

13. The cutting blade of any of claims 1 to 12, **characterized in that** the first face (2) comprises a first surface (9) which is planar.

14. The cutting blade of any of claims 1 to 12, **characterized in that** the first face (2) comprises a quaternary bevel (8) with

    • a third line (12) connecting the quaternary bevel (8) and the first surface (9)
    • the quaternary bevel (8) extending from the cutting edge (4) to the third line (12)
    • a fourth wedge angle $\theta_4$ between an imaginary extension of the first surface (9') and the quaternary bevel (8), wherein $\theta_4$ is preferably 5° to 75°, more preferably 10° to 60° and even more preferably 15° to 46°, and most preferably 45°.

15. A hair removal device comprising a cutting blade of any of claims 1 to 14.

**Patentansprüche**

1. Schneidmesser (1), das einen Klingenkörper (15) aufweist, umfassend oder bestehend aus einem ersten Material (18) und einem zweiten Material (19), das mit dem ersten Material (18) verknüpft ist, wobei das Schneidmesser (1) eine erste Fläche (2), eine zweite Fläche (3), die der ersten Fläche (2) gegenüberliegt, und eine Schneidkante (4) aufweist, wobei

   • die erste Fläche (2) eine erste Oberfläche (9) umfasst und
   • die zweite Fläche (3) eine primäre Schrägung (5), die eine konvexe oder gerade Querschnittsform aufweist, und eine sekundäre Schrägung (6) umfasst, die eine konkave Querschnittsform aufweist,
   • wobei eine erste Linie (10) die primäre Schrägung (5) und die sekundäre Schrägung (6) verbindet,
   • wobei sich die primäre Schrägung (5) von der Schneidkante (4) zu der ersten Linie (10) verlängert,
   • wobei die Schneidkante (4) und die primäre Schrägung (5) in dem zweiten Material (19) geformt sind,

- mit einem ersten Keilwinkel $\theta_1$ zwischen der ersten Oberfläche (9) und der primären Schrägung (5) oder der Tangente der primären Schrägung (5) durch die Schneidkante (4),
- mit einem zweiten Keilwinkel $\theta_2$ zwischen der ersten Oberfläche (9) und der Tangente der sekundären Schrägung (6),

wobei $\theta_1 > \theta_2$.

2. Schneidmesser nach Anspruch 1,
   **dadurch gekennzeichnet, dass** der erste Keilwinkel $\theta_1$ von 10° bis 90°, vorzugsweise von 12° bis 75°, mehr bevorzugt von 15° bis 46° und noch mehr bevorzugt von 20° bis 45° reicht und/oder der zweite Keilwinkel $\theta_2$ von -5° bis 40°, vorzugsweise von 0° bis 30°, mehr bevorzugt von 5° bis 25° reicht, und/oder der zweite Keilwinkel $\theta_2$ von -5° bis 30°, vorzugsweise von 0° bis 20°, mehr bevorzugt von 5° bis 15° und noch mehr bevorzugt von 8° bis 12° reicht.

3. Schneidmesser nach einem der Ansprüche 1 oder 2,
   **dadurch gekennzeichnet, dass** die primäre Schrägung (7) eine Länge $d_1$, die die Abmessung ist, die auf die erste Oberfläche (9) projiziert wird, die von der Schneidkante (4) zu der ersten Schnittlinie (10) entnommen wird, von 0,1 bis 7 $\mu$m, vorzugsweise von 0,5 bis 5 $\mu$m, mehr bevorzugt von 1 bis 3 $\mu$m, aufweist.

4. Schneidmesser nach einem der Ansprüche 1 bis 3,
   **dadurch gekennzeichnet, dass** die Abmessung, die auf die erste Oberfläche (9) und/oder die gedachte Verlängerung der ersten Oberfläche (9') projiziert wird, die von der Schneidkante (4) zu der zweiten Schnittlinie (11) entnommen wird, eine Länge $d_2$ aufweist, die von 1 bis 150 $\mu$m, vorzugsweise von 5 bis 100 $\mu$m, mehr bevorzugt von 10 bis 75 $\mu$m, und insbesondere 15 bis 50 $\mu$m reicht.

5. Schneidmesser nach einem der Ansprüche 1 bis 4,
   **dadurch gekennzeichnet, dass** das erste Material (18) ein Material umfasst oder daraus besteht, das aus der Gruppe ausgewählt ist bestehend aus

   - Metallen, vorzugsweise Titan, Nickel, Chrom, Niobium, Wolfram, Tantal, Molybdän, Vanadium, Platin, Germanium, Eisen und Legierungen davon, insbesondere Stahl,
   - Keramik, die Kohlenstoff, Stickstoff, Bor, Sauerstoff und Kombinationen davon, vorzugsweise Siliciumkarbid, Zirkoniumoxid, Aluminiumoxid, Siliciumnitrid, Bornitrid, Tantalnitrid, TiAlN, TiCN und/oder $TiB_2$ enthält,
   - Glaskeramik; vorzugsweise aluminiumhaltige Glaskeramik,
   - Verbundwerkstoffen, die aus Keramikmaterialien in einer metallischen Matrix (Cermets) hergestellt sind,
   - Hartmetallen, vorzugsweise gesinterten Carbidhartmetallen, wie Wolframcarbid oder Titancarbid, das mit Kobalt oder Nickel gebunden ist,
   - Silizium oder Germanium, vorzugsweise mit der kristallinen Ebene parallel zu der zweiten Fläche (2), Waferausrichtung <100>, <110>, <111> oder <211>,
   - einkristallinen Materialien,
   - Glas oder Saphir,
   - polykristallinem oder amorphem Silizium oder Germanium,
   - mono- oder polykristallinem Diamant, diamantartigem Kohlenstoff (DLC), Adamantinkohlenstoff und
   - Kombinationen davon.

6. Schneidmesser nach einem der Ansprüche 1 bis 5,
   **dadurch gekennzeichnet, dass** das zweite Material (19) ein Material umfasst oder daraus besteht, das aus der Gruppe ausgewählt ist bestehend aus

   - Oxiden, Nitriden, Carbiden, Bonden, vorzugsweise Aluminiumnitrid, Chromnitrid, Titannitrid, Titankohlenstoffnitrid, Titanaluminiumnitrid, kubischem Bornitrid
   - Boraluminiummagnesium
   - Kohlenstoff, vorzugsweise Diamant, polykristallinem Diamant, nanokristallinem Diamant, diamantartigem Kohlenstoff (DLC) wie tetraedrischem amorphem Kohlenstoff; und
   - Kombinationen davon.

7. Schneidmesser nach einem der Ansprüche 1 bis 6,
   **dadurch gekennzeichnet, dass** das zweite Material (19) mindestens eine der folgenden Eigenschaften erfüllt:

   - eine Dicke von 0,15 bis 20 $\mu$m, vorzugsweise 2 bis 15 $\mu$m und mehr bevorzugt 3 bis 12,
   - einen Elastizitätsmodul von weniger als 1200 GPa, vorzugsweise weniger als 900 GPa, mehr bevorzugt weniger als 750 GPa,
   - eine querverlaufende Bruchspannung $\sigma_0$ von mindestens 1 GPa, vorzugsweise mindestens 2,5 GPa, mehr bevorzugt mindestens 5 GPa,
   - eine Härte von mindestens 20 GPa.

8. Schneidmesser nach einem der Ansprüche 1 bis 7,
   **dadurch gekennzeichnet, dass** das zweite Material (19) nanokristallinen Diamant umfasst oder daraus besteht und mindestens eine der folgenden Eigenschaften erfüllt:

   - eine durchschnittliche Oberflächenrauheit $R_{RMS}$ von weniger als 100 nm, weniger als 50 nm, mehr bevorzugt weniger als 20 nm,

• eine durchschnittliche Grain-Größe $d_{50}$ des nanokristallinen Diamants von 1 bis 100 nm, vorzugsweise von 5 bis 90 nm, mehr bevorzugt von 7 bis 30 nm und noch mehr bevorzugt von 10 bis 20 nm.

9. Schneidmesser nach einem der Ansprüche 1 bis 8, **dadurch gekennzeichnet, dass** das erste Material (18) und/oder das zweite Material (19) mindestens in Bereichen mit einem reibungsarmen Material beschichtet sind, vorzugsweise ausgewählt aus der Gruppe, bestehend aus Fluorpolymeren, Parylen, Polyvinylpyrrolidon, Polyethylen, Polypropylen, Polymethylmethacrylat, Graphit, diamantartigem Kohlenstoff (DLC) und Kombinationen davon.

10. Schneidmesser nach einem der Ansprüche 1 bis 9, **dadurch gekennzeichnet, dass** die Schneidkante (4) einen Spitzenradius von weniger als 200 nm, vorzugsweise weniger als 100 nm und mehr bevorzugt weniger als 50 nm aufweist.

11. Schneidmesser nach einem der Ansprüche 1 bis 10, **dadurch gekennzeichnet, dass** die zweite Fläche (3) ferner eine gerade oder konkave tertiäre Schräge (7) umfasst

• wobei eine zweite Linie (11) die sekundäre Schrägung (6) und die tertiäre Schrägung (7) verbindet,
• wobei sich die tertiäre Schrägung (7) von der zweiten Linie (11) nach hinten verlängert,
• mit einem dritten Keilwinkel $\theta_3$ zwischen der ersten Oberfläche (9) und der tertiären Schrägung (7) oder ihrer Tangente, wobei der dritte Keilwinkel $\theta_3$ vorzugsweise von 1° bis 60°, mehr bevorzugt von 10° bis 55° und noch mehr bevorzugt 19° bis 46° beträgt, und am meisten bevorzugt 45° ist.

12. Schneidmesser nach einem der Ansprüche 1 bis 11, **dadurch gekennzeichnet, dass** die zweite Linie (11) an einer Grenzoberfläche (20) des ersten Materials (18) und des zweiten Materials (19) angeordnet ist.

13. Schneidmesser nach einem der Ansprüche 1 bis 12, **dadurch gekennzeichnet, dass** die erste Fläche (2) eine erste Oberfläche (9) umfasst, die ebenflächig ist.

14. Schneidmesser nach einem der Ansprüche 1 bis 12, **dadurch gekennzeichnet, dass** die erste Fläche (2) eine quartäre Schräge (8) umfasst,

• wobei eine dritte Linie (12) die quartäre Schrägung (8) und die erste Oberfläche (9) verbindet
• wobei die quartäre Schrägung (8) sich von der Schneidkante (4) zu der dritten Linie (12) erstreckt
• mit einem vierten Keilwinkel $\theta_4$ zwischen einer gedachten Verlängerung der ersten Oberfläche (9') und der quartären Schrägung (8), wobei $\theta_4$ vorzugsweise 5° bis 75°, mehr bevorzugt 10° bis 60° und noch mehr bevorzugt 15° bis 46° und am meisten bevorzugt 45° beträgt.

15. Haarentfernungsvorrichtung, umfassend ein Schneidmesser nach einem der Ansprüche 1 bis 14.

**Revendications**

1. Lame de coupe (1) ayant un corps de lame (15) comprenant ou constitué d'un premier matériau (18) et d'un second matériau (19) relié au premier matériau (18), la lame de coupe (1) ayant une première face (2), une seconde face (3) opposée à la première face (2), et un bord de coupe (4), dans laquelle

• la première face (2) comprend une première surface (9)
• la seconde face (3) comprend un biseau primaire (5) ayant une forme de section transversale convexe ou droite et un biseau secondaire (6) ayant une forme de section transversale convexe avec
• une première ligne (10) reliant le biseau primaire (5) et le biseau secondaire (6),
• le biseau primaire (5) s'étendant depuis le bord de coupe (4) jusqu'à la première ligne (10),
• le bord de coupe (4) et le biseau primaire (5) sont formés dans le second matériau (19),
• un premier angle de taillant $\theta_1$ entre la première surface (9) et le biseau primaire (5) ou la tangente du biseau primaire (5) à travers le bord de coupe (4),
• un deuxième angle de taillant $\theta_2$ entre la première surface (9) et la tangente du biseau secondaire (6),

dans laquelle $\theta_1 > \theta_2$.

2. Lame de coupe selon la revendication 1, **caractérisée en ce que** le premier angle de taillant $\theta_1$ est compris dans la plage allant de 10° à 90°, de préférence 12° à 75°, plus préférablement 15° à 46°, et encore plus préférablement 20° à 45° et/ou le deuxième angle de taillant $\theta_2$ est compris dans la plage allant de -5° à 40°, de préférence 0° à 30°, plus préférablement 5° à 25° et/ou le deuxième angle de taillant $\theta_2$ est compris dans la plage allant de -5° à 30°, de préférence 0° à 20°, plus préférablement 5° à 15°, et encore plus préférablement 8° à 12°.

3. Lame de coupe selon l'une quelconque des revendications 1 ou 2,
**caractérisée en ce que** le biseau primaire (5) a une longueur $d_1$ qui est la dimension projetée sur la première surface (9) prise depuis le bord de coupe (4) jusqu'à la première ligne (10) allant de 0,1 à 7 $\mu$m, de préférence de 0,5 à 5 $\mu$m, plus préférablement de 1 à 3 $\mu$m.

4. Lame de coupe selon l'une quelconque des revendications 1 à 3,
   **caractérisée en ce que** la dimension projetée sur la première surface (9) et/ou la extension imaginaire de la première surface (9') prise depuis le bord de coupe (4) jusqu'à une seconde ligne (11) a une longueur $d_2$ qui est comprise dans la plage allant de 1 à 150 $\mu$m, de préférence 5 à 100 $\mu$m, plus préférablement de 10 à 75 $\mu$m, et en particulier 15 à 50 $\mu$m.

5. Lame de coupe selon l'une quelconque des revendications 1 à 4,
   **caractérisée en ce que** le premier matériau (18) comprend ou est constitué d'un matériau choisi dans le groupe constitué de

   - métaux, de préférence titane, nickel, chrome, niobium, tungstène, tantale, molybdène, vanadium, platine, germanium, fer, et alliages de ceux-ci, en particulier acier,
   - céramiques contenant carbone, azote, bore, oxygène et combinaisons de ceux-ci, de préférence carbure de silicium, oxyde de zirconium, oxyde d'aluminium, nitrure de silicium, nitrure de bore, nitrure de tantale, TiAlN, TiCN, et/ou $TiB_2$,
   - vitrocéramiques ; de préférence vitrocéramiques contenant de l'aluminium,
   - matériaux composites fabriqués à partir de matériaux céramiques dans une matrice métallique (cermets),
   - métaux durs, de préférence métaux durs de carbure fritté, tels que carbure de tungstène ou carbure de titane lié avec du cobalt ou du nickel,
   - silicium ou germanium, de préférence avec le plan cristallin parallèle à la seconde face (2), orientation de tranche <100>, <110>, <111 > ou <211>,
   - matériaux monocristallins,
   - verre ou saphir,
   - silicium ou germanium polycristallin ou amorphe,
   - diamant mono ou polycristallin, carbone sous forme de diamant amorphe (cda), carbone adamantin et
   - combinaisons de ceux-ci.

6. Lame de coupe selon l'une quelconque des revendications 1 à 5,
   **caractérisée en ce que** le second matériau (19) comprend ou est constitué d'un matériau choisi dans le groupe constitué de

   - oxydes, nitrures, carbures, borures, de préférence nitrure d'aluminium, nitrure de chrome, nitrure de titane, nitrure de carbone et titane, nitrure d'aluminium et titane, nitrure de bore cubique
   - bore aluminium magnésium
   - carbone, de préférence diamant, diamant polycristallin, diamant nanocristallin, carbone sous forme de diamant amorphe (cda) comme le carbone amorphe tétraédrique ; et
   - des combinaisons de ceux-ci.

7. Lame de coupe selon l'une quelconque des revendications 1 à 6,
   **caractérisée en ce que** le second matériau (19) remplit au moins l'une des propriétés suivantes :

   - une épaisseur de 0,15 à 20 $\mu$m, de préférence 2 à 15 $\mu$m et plus préférablement 3 à 12,
   - un module d'élasticité inférieur à 1200 GPa, de préférence inférieur à 900 GPa, plus préférablement inférieur à 750 GPa,
   - une contrainte à la rupture transversale $\sigma_0$ d'au moins 1 GPa, de préférence d'au moins 2,5 GPa, plus préférablement d'au moins 5 GPa,
   - une dureté d'au moins 20 GPa.

8. Lame de coupe selon l'une quelconque des revendications 1 à 7,
   **caractérisée en ce que** le second matériau (19) comprend ou est constitué de diamant nanocristallin et remplit au moins l'une des propriétés suivantes :

   - une rugosité de surface moyenne $R_{RMS}$ inférieure à 100 nm, inférieure à 50 nm, plus préférablement inférieure à 20 nm,
   - une taille de grain moyenne $d_{50}$ du diamant cristallin fin de 1 à 100 nm, de préférence de 5 à 90 nm, plus préférablement de 7 à 30 nm, et encore plus préférablement 10 à 20 nm.

9. Lame de coupe selon l'une quelconque des revendications 1 à 8,
   **caractérisée en ce que** le premier matériau (18) et/ou le second matériau (19) sont revêtus au moins dans des régions avec un matériau à faible frottement, de préférence choisi dans le groupe constitué de fluoropolymères, parylène, polyvinylpyrrolidone, polyéthylène, polypropylène, polyméthacrylate de méthyle, graphite, carbone sous forme de diamant amorphe (cda) et combinaisons de ceux-ci.

10. Lame de coupe selon l'une quelconque des revendications 1 à 9,
    **caractérisée en ce que** le bord de coupe (4) a un rayon de pointe inférieur à 200 nm, de préférence inférieur à 100 nm et plus préférablement inférieur à 50 nm.

**11.** Lame de coupe selon l'une quelconque des revendications 1 à 10,
**caractérisée en ce que** la seconde face (3) comprend en outre un biseau tertiaire (7) droit ou concave avec

• une seconde ligne (11) reliant le biseau secondaire (6) et le biseau tertiaire (7),
• le biseau tertiaire (7) s'étendant de la deuxième ligne (11) vers l'arrière,
• un troisième angle de taillant $\theta_3$ entre la première surface (9) et le biseau tertiaire (7) ou sa tangente, dans laquelle le troisième angle de taillant $\theta_3$ est compris dans la plage de préférence allant de 1° à 60°, plus préférablement 10° à 55°, et encore plus préférablement 19° à 46°, et le plus préférablement est 45°.

**12.** Lame de coupe selon l'une quelconque des revendications 1 à 11,
**caractérisée en ce que** la seconde ligne (11) est agencée au niveau d'une surface limite (20) du premier matériau (18) et du second matériau (19).

**13.** Lame de coupe selon l'une quelconque des revendications 1 à 12,
**caractérisée en ce que** le premier côté (2) comprend une première surface (9) qui est plane.

**14.** Lame de coupe selon l'une quelconque des revendications 1 à 12,
**caractérisée en ce que** le premier côté (2) comprend un biseau quaternaire (8) avec

• une troisième ligne (12) reliant le biseau quaternaire (8) et la première surface (9)
• le biseau quaternaire (8) s'étendant depuis le bord de coupe (4) jusqu'à la troisième ligne (12)
• un quatrième angle de taillant $\theta_4$ entre une extension imaginaire de la première surface (9') et le biseau quaternaire (8), dans laquelle $\theta_4$ va de préférence de 5° à 75°, plus préférablement 10° à 60°, encore plus préférablement 15° à 46°, et le plus préférablement 45°.

**15.** Dispositif d'épilation comprenant une lame de coupe selon l'une quelconque des revendications 1 à 14.

FIG. 1

FIG. 2

FIG. 3

FIG. 4

FIG. 5

FIG. 6

FIG. 7

# FIG. 8a

# FIG. 8b

step 9

step 9a

101

104

step 9b

101

5

step 9c

101

5

$\theta_i$

step 9d

7

6

5

$\theta_1$

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3606682 A
- US 3292478 A

- DE 19859905 A1

**Non-patent literature cited in the description**

- **R.MORRELL et al.** *Int. Journal of Refractory Metals & Hard Materials,* 2010, vol. 28, 508-515
- Der 4-Kugelversuch zur Ermittlung der biaxialen Biegefestigkeit spröder Werkstoffe. **R. DANZER ; J. KRIEGESMANN et al.** Technische keramische Werkstoffe. HvB Press

- **YEON-GIL JUNG.** *J. Mater. Res.,* vol. 19 (10), 3076